# EUROPÄISCHE PATENTSCHRIFT

(11) **EP 2 239 526 B1**
(45) Veröffentlichungstag und Bekanntmachung des Hinweises auf die Patenterteilung: **13.07.2016**
(21) Anmeldenummer: 10003644.1
(22) Anmeldetag: 01.04.2010
(51) Int. Cl.: F25B 17/08

(54) **Sorptionsvorrichtung**
Sorption device
Dispositif de sorption

(30) Priorität: 06.04.2009 DE 102009016303
(43) Veröffentlichungstag der Anmeldung: 13.10.2010
(73) Patentinhaber: Viessmann Werke GmbH & Co. KG, 35107 Allendorf (DE)
(72) Erfinder: Dawou, Belal, Dr., 59955 Winterberg (DE); Chmielewski, Stefanie, 35066 Frankenberg (DE); Bornmann, Andreas, 35099 Burgwald (DE); Höfle, Peter, 64646 Heppenheim (DE)
(74) Vertreter: Wolf, Michael

(56) Entgegenhaltungen:
- EP-A1- 1 985 948
- DE-A1-102004 049 408
- GB-A- 2 213 244

## Beschreibung

Die Erfindung betrifft eine Sorptionsvorrichtung gemäß dem Oberbegriff des Patentanspruchs 1.

Eine Vakuum-Sorptionsvorrichtung der eingangs genannten Art ist nach der DE 10 2004 049 408 A1 bekannt. Diese besteht aus einem ersten Volumenbereich, in dem ein periodisch ein Kältemittel (zum Beispiel Wasser) sorbierender oder desorbierender Sorber (zum Beispiel Zeolith) und ein Kondensator angeordnet sind, und einem - geodätisch gesehen - unterhalb des ersten angeordneten zweiten Volumenbereich, in dem ein Verdampfer angeordnet ist, wobei eine tiefste Stelle des ersten Volumenbereichs eine zum zweiten Volumenbereich führende Öffnung aufweist, die mit einem im ersten Volumenbereich angeordneten, bewegungsgeführt nach oben öffnenden Deckelelement verschließbar ausgebildet ist. Die auch für die nachfolgend zu erläuternde Erfindung geltende Maßgabe "bewegungsgeführt" bringt dabei zum Ausdruck, dass das Deckelelement fest, aber beweglich an einer Wand oder dergleichen des Volumenbereichs befestigt ist.

Die Funktionsweise der besagten Sorptionsvorrichtung ist in der DE 10 2004 049 408 A1 beschrieben. Hierauf wird der Einfachheit halber vollumfänglich Bezug genommen.

Die Dokumente EP 1 985 948 und GB 2 213 244 offenbaren Sorptionvorrichtungen mit einem Deckelelement.

Der Erfindung liegt die Aufgabe zugrunde, eine Sorptionsvorrichtung der eingangs genannten Art weiter zu verbessern, und zwar insbesondere hinsichtlich der Trenneinrichtung zwischen dem ersten und zweiten Volumenbereich.

Diese Aufgabe ist mit einer Sorptionsvorrichtung der eingangs genannten Art durch die im Kennzeichen des Patentanspruchs 1 aufgeführten Merkmale gelöst.

Nach der Erfindung ist also vorgesehen, dass das Deckelelement seitens des ersten Volumenbereichs eine Oberfläche mit einer das Kältemittel zum Rand des Deckelelements ableitenden Form aufweist.

Mit anderen Worten ist erfindungsgemäß gewährleistet, dass sich oberhalb des Deckelelements kein Kältemittel sammeln kann, das das Öffnen des Deckelelements behindern würde. Es hat sich nämlich überraschender Weise gezeigt, dass bei entsprechender Gewichtsdimensionierung des Deckelelements die sich im Betrieb ergebende Druckdifferenz zwischen dem ersten und zweiten Volumenbereich ausreicht, um das Deckelelement zu öffnen (anzuheben), vorausgesetzt eben, dass das Öffnen des Deckelelements nicht von einem oberhalb des Deckelelements angesammelten Kältemittel behindert wird. - Im Unterschied zur DE 10 2004 049 408 B4 kann somit erfindungsgemäß auf einen externen Antriebsmechanismus verzichtet werden.

Zu weiteren Verbesserung des Öffnungsverhaltens des Deckelelements ist weiterhin vorgesehen, dass an diesem ein Federelement angeordnet ist, das eine Federkraft aufweist, die entgegen einer Gewichtskraft des Deckelelements gerichtet und stets kleiner als diese ist. Diese Maßgabe hat zur Folge, dass die Druckdifferenz zum Öffnen des Deckelelements durch entsprechende Dimensionierung des Gewichts des Deckelelement und der Kraft der Feder klein gehalten werden kann, was sich letztlich in einer Verbesserung des Wirkungsgrades der Gesamtvorrichtung niederschlägt.

Der Vollständigkeit halber wird an dieser Stelle auf die Schrift DE 102 38 510 A1 verwiesen. Aus dieser ist zwar prinzipiell auch bereits ein von einer Feder bewegtes Deckelelement bekannt, diese Schrift weist aber insofern in eine völlig andere Denkrichtung, als sich bei dieser Lösung das Öffnen des darüber hinaus im zweiten (und nicht im ersten!) Volumenbereich angeordneten Deckelelements gerade aufgrund einer sich oberhalb des Deckelelements ansammelnden Kältemittelmenge bewirkt wird.

Andere vorteilhafte Weiterbildungen der erfindungsgemäßen Vakuum-Sorptionsvorrichtung ergeben sich aus den abhängigen Patentansprüchen.

Die erfindungsgemäße Sorptionsvorrichtung einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

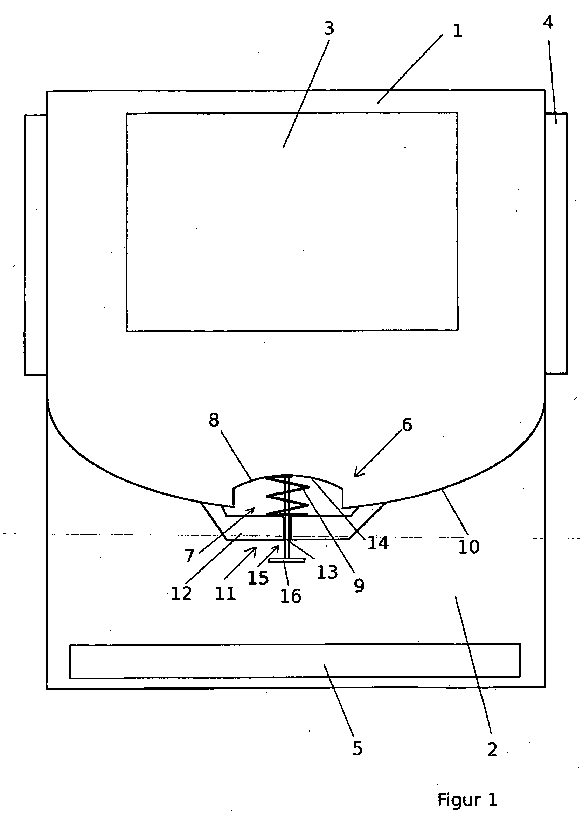

Es zeigt schematisch und im Schnitt
- Figur 1: die erfindungsgemäße Sorptionsvorrichtung mit einem Federelement.

Die in Figur 1 dargestellte Vakuum-Sorptionsvorrichtung besteht in bekannter Weise aus einem ersten Volumenbereich 1, in dem ein periodisch ein Kältemittel (vorzugsweise Wasser) sorbierender oder desorbierender Sorber 3 (vorzugsweise aus Zeolith) und ein Kondensator 4 angeordnet sind. Der Kondensator 4 umschließt den ersten Volumenbereich 1 mantelförmig und ist in einer Wandung des Gehäuses des ersten Volumenbereichs 1 angeordnet. Weiterhin besteht die Sorptionsvorrichtung aus einem - geodätisch gesehen - unterhalb des ersten angeordneten zweiten Volumenbereich 2, in dem ein Verdampfer 5 angeordnet ist. Der Verdampfer 5 dient in bekannter Weise zum Beispiel zur Einkopplüng von Erdwärme in den Sorptionsprozess.

Eine tiefste Stelle 6 des ersten Volumenbereichs 1 weist eine zum zweiten Volumenbereich 2 führende Öffnung 7 auf, die mit einem im ersten Volumenbereich 1 angeordneten, bewegungsgeführt nach oben öffnenden Deckelelement 8 verschließbar ausgebildet ist. Zwischen der Öffnung 7 und dem Deckelelement 8 ist dabei (nicht extra dargestellt) ein Dichtelement angeordnet.

Wesentlich für die erfindungsgemäße Sorptionsvorrichtung ist nun, dass das Deckelelement 8 seitens des ersten Volumenbereichs 1 eine Oberfläche mit einer das Kältemittel zum Rand des Deckelelements 8 ableitenden Form aufweist. Bezogen auf Figur 1 ergibt sich somit, dass sich vom Sorber 3 kommendes und am Kondensator kondensiertes Wasser unter keinen Umständen auf dem Deckelelement 8 ansammeln und damit dessen Bewegungsfreiheit einschränken kann. Hierzu weist das vorzugsweise ausschließlich vertikalbewegliche Deckelelement 8 besonders bevorzugt eine kalottenförmig zum Rand nach unten gewölbte Oberfläche auf, an die sich zudem, wie dargestellt, ein zylindrischer Bereich anschliessen kann. Bei der Dimensionierung des Deckelelements 8 ist dabei das bei der Desorption insgesamt anfallende Kältemittelvolumen zu beachten, und zwar zum Beispiel in der Weise, dass der zylindrische Teil des Deckelelements um so länger (höher) ausgebildet wird, je größer die im Umlauf befindliche Menge an Kältemittel ist. Hinsichtlich der zu Beginn der Sorptionphase zu überwindenden Druckdifferenz besteht dabei prinzipiell die Maßgabe, das Deckelelement 8 so leicht wie möglich auszubilden.

Die tatsächliche Masse des Deckelelements 8 verliert allerdings etwas an Bedeutung, wenn man, was in Figur 1 dargestellt ist, am Deckelelement 8 ein Federelement 9 (vorzugsweise eine Schraubenfeder, insbesondere Schraubendruckfeder) anordnet, wobei dieses Federelement eine Federkraft aufweist, die entgegen einer nach unten weisenden Gewichtskraft des Deckelelements 8 gerichtet und stets kleiner als diese ist. Damit ergibt sich, dass sich das Deckelelement 8 an sich automatisch in Verschlussstellung (nach unten) begibt. Da allerdings das Federelement 9 von unten eine (Unterstützungs-) Kraft gegen das Deckelelement 8 ausübt, genügt bereits ein sehr geringer Unterdruck (gegenüber dem zweiten Volumenbereich 2) im ersten Volumenbereich 1, um das Deckelelement 8 anzuheben bzw. in Öffnungsstellung (nach oben) zu halten.

Bei der in Figur 1 dargestellten, bevorzugten Ausführungsform der erfindungsgemäßen Sorptionsvorrichtung ist weiterhin vorgesehen, dass zwischen dem ersten und zweiten Volumenbereich 1, 2 ein beckenförmiger, vorzugsweise klöpperbodenartiger, die Öffnung 7 aufweisender Trennboden 10 angeordnet ist. An diesem Trennboden 10 ist eine Führung 11 für das Deckelelement 8 angeordnet, wobei diese aus einem trennbodenseitigen und einem deckelseitigen Teil 12, 13 besteht, wobei die beiden Teile 12, 13 vorzugsweise anschlagsbegrenzt zueinander beweglich ausgebildet sind. Weiterhin ist das deckelseitige Teil 13 der Führung 11 stabförmig ausgebildet. Zwischen einer Unterseite 14 des Deckelelements 8 und dem trennbodenseitigen Teil 12 der Führung 11 ist das Federelement 9 angeordnet. Das trennbodenseitige Teil 12 der Führung 11 weist eine Durchgangsöffnung 15 für das deckelseitige Teil 13 der Führung 11 auf, wobei auf einer Seite der Durchgangsöffnung 15 das Deckelelement 8 und auf der anderen Seite der Durchgangsöffnung 15 am deckelseitigen Teil 13 der Führung 11 ein Anschlagselement 16 angeordnet ist.

Die erfindungsgemäße Sorptionsvorrichtung funktioniert wie folgt:
Zu Beginn der Desorptionsphase ist das Kältemittel im wesentlichen vollständig im Sorber 3 gespeichert (sorbiert). Durch Wärmeeinbringung in den Sorber 3 wird das Kältemittel nach und nach aus dem Sorber 3 ausgetrieben (verdampft). Am vergleichsweise kalten Kondensator 4 kondensiert der Kältemitteldampf, wobei sich das flüssige Kondensat (Kältemittel) daraufhin unten im beckenförmigen Trennboden 10 sammelt. Über die Öffnung 7 kann es zu diesem Zeitpunkt noch nicht abfließen, da das Deckelelement 8 die Öffnung 7 verschließt.

Nach vollständiger Desorption des Kältemittels beginnt die Sorptionsphase. Diese beginnt mit der Abkühlung des Sorbers 3, dessen Wärme beispielsweise an ein Heiznetz in Form von Nutzwärme abgeführt wird. Dabei sinken Druck und Temperatur im ersten Volumenbereich 1. Ab einer bestimmten Druckdifferenz zwischen dem ersten und zweiten Volumenbereich 1, 2 öffnet sich das Deckelelement 8 und das Kältemittel gelangt in den zweiten Volumenbereich 2 und wird dort am Verdampfer 5 zum Beispiel durch Einkopplung von Erdwärme verdampft. Das verdampfte Kältemittel steigt durch die Öffnung 7 zum Sorber 3 auf und wird dort unter Freisetzung der Sorptionswärme sorbiert.

Dass sich auf dem erfindungsgemäßen Deckelelement 8 kein Kältemittel ansammeln kann, hat den Vorteil, dass die tatsächliche Öffnungsdruckdifferenz zu keinem Zeitpunkt beeinflusst wird bzw. auf Dauer konstant klein ist. Bei Verwendung einer Feder ist diese ausschließlich durch deren Federkraft und die Gewichtskraft des Deckelelements 8 und insbesondere nicht durch eine über dem Deckelelement 8 angesammelte Kältemittelmenge definiert (1 cm Kältemittel führt etwa zu einer Öffnungsdruckdifferenzänderung von 1 mbar). Ein Erhöhung der Öffnungsdruckdifferenz würde zu einer Reduzierung des absoluten Drucks im ersten Volumenbereich 1 (typischer Weise beträgt der Druck dort zwischen 6 und 10 mbar) und damit zu einer Verschlechterung der Wärme- und Stoffübertragung am Sorber 3, zu einer Verringerung des Wärmepumpeneffekts und damit schließlich zu einer Reduzierung des Gesamtwirkungsgrades der Anlage führen.

### Bezugszeichenliste

- 1: erster Volumenbereich
- 2: zweiter Volumenbereich
- 3: Sorber
- 4: Kondensator
- 5: Verdampfer
- 6: tiefste Stelle des ersten Volumenbereichs
- 7: Öffnung
- 8: Deckelelement
- 9: Federelement
- 10: Trennboden
- 11: Führung
- 12: trennbodenseitiger Teil der Führung
- 13: deckelseitiger Teil der Führung
- 14: Unterseite des Deckelelements
- 15: Durchgangsöffnung
- 16: Anschlagselement

## Patentansprüche

1. Sorptionsvorrichtung, umfassend einen ersten Volumenbereich (1), in dem ein periodisch ein Kältemittel sorbierender oder desorbierender Sorber (3) und ein Kondensator (4) angeordnet sind, und einen unterhalb des ersten angeordneten zweiten Volumenbereich (2), in dem ein Verdampfer (5) angeordnet ist, wobei eine tiefste Stelle (6) des ersten Volumenbereichs (1) eine zum zweiten Volumenbereich (2) führende Öffnung (7) aufweist, die mit einem im ersten Volumenbereich (1) angeordneten, bewegungsgeführt nach oben öffnenden Deckelelement (8) verschließbar ausgebildet ist, wobei das Deckelelement (8) seitens des ersten Volumenbereichs (1) eine Oberfläche mit einer das Kältemittel zum Rand des Deckelelements (8) ableitenden Form aufweist, wobei am Deckelelement (8) ein Federelement (9) angeordnet ist,
**dadurch gekennzeichnet,**
**dass** das Federelement eine Federkraft aufweist, die entgegen einer nach unten weisenden Gewichtskraft des Deckelelements (8) gerichtet und stets kleiner als diese ist.

2. Sorptionsvorrichtung nach Anspruch 1,
**dadurch gekennzeichnet,**
**dass** das Deckelelement (8) eine kalottenförmig zum Rand nach unten gewölbte Oberfläche aufweist.

3. Sorptionsvorrichtung nach Anspruch 1 oder 2,
**dadurch gekennzeichnet,**
**dass** das Deckelelement (8) vertikalbeweglich ausgebildet ist.

4. Sorptionsvorrichtung nach Anspruch 1,
**dadurch gekennzeichnet,**
**dass** das Federelement (9) als Schraubenfeder, vorzugsweise als Schraubendruckfeder, ausgebildet ist.

5. Sorptionsvorrichtung nach einem der Ansprüche 1 bis 4,
**dadurch gekennzeichnet,**
**dass** zwischen der Öffnung (7) und dem Deckelelement (8) ein Dichtelement angeordnet ist.

6. Sorptionsvorrichtung nach einem der Ansprüche 1 bis 5, **dadurch gekennzeichnet,**
**dass** zwischen dem ersten und zweiten Volumenbereich (1, 2) ein beckenförmiger, vorzugsweise klöpperbodenartiger, die Öffnung (7) aufweisender Trennboden (10) angeordnet ist.

7. Sorptionsvorrichtung nach Anspruch 6,
**dadurch gekennzeichnet,**
**dass** am Trennboden (10) eine Führung (11) für das Deckelelement (8) angeordnet ist.

8. Sorptionsvorrichtung nach Anspruch 7,
**dadurch gekennzeichnet,**
**dass** die Führung (11) aus einem trennbodenseitigen und einem deckelseitigen Teil (12, 13) besteht, wobei die beiden Teile (12, 13) vorzugsweise anschlagsbegrenzt zueinander beweglich ausgebildet sind.

9. Sorptionsvorrichtung nach Anspruch 8,
**dadurch gekennzeichnet,**
**dass** das deckelseitige Teil (13) der Führung (11) stabförmig ausgebildet ist.

10. Sorptionsvorrichtung nach Anspruch 8 oder 9,
**dadurch gekennzeichnet,**
**dass** zwischen einer Unterseite (14) des Deckelelements (8) und dem trennbodenseitigen Teil (12) der Führung (11) das Federelement (9) angeordnet ist.

11. Sorptionsvorrichtung nach einem der Ansprüche 8 bis 10,
**dadurch gekennzeichnet,**
**dass** das trennbodenseitige Teil (12) der Führung (11) eine Durchgangsöffnung (15) für das deckelseitige Teil (13) der Führung (11) aufweist.

12. Sorptionsvorrichtung nach Anspruch 11,
**dadurch gekennzeichnet,**
**dass** auf einer Seite der Durchgangsöffnung (15) das Deckelelement (8) und auf der anderen Seite der Durchgangsöffnung (15) am deckelseitigen Teil (13) der Führung (11) ein Anschlagselement (16) angeordnet ist.

## Claims

1. Sorption device comprising a first volume region (1) in which a sorber (3) which periodically sorbs or desorbs a refrigerant and a condenser (4) are arranged and a second volume region (2) located underneath the first volume region, in which an evaporator (5) is arranged, wherein a deepest point (6) of the first volume region (1) has an opening (7) leading to the second volume region (2) which is configured to be closable with a motion-guided, upwardly opening cover element (8) arranged in the first volume region (1), wherein the cover element (8) on the side of the first volume region (1) has a surface having a shape which drains the refrigerant towards the edge of the cover element (8), wherein a spring element (9) is disposed on the cover element (8),
**characterized in**
**that** the spring element has a spring force which is directed against a downwardly pointing weight force of the cover element (8) and is always smaller than this.

2. The sorption device according to claim 1,
**characterized in**
**that** the cover element (8) has a hemispherical surface which is arched downwards towards the edge.

3. The sorption device according to claim 1 or 2,
**characterized in**
**that** the cover element (8) is configured to be vertically movable.

4. The sorption device according to claim 1,
**characterized in**
**that** the spring element (9) is configured as a helical spring, preferably as a helical compression spring.

5. The sorption device according to any one of claims 1 to 4,
**characterized in**
**that** a sealing element is disposed between the opening (7) and the cover element (8).

6. The sorption device according to any one of claims 1 to 5,
**characterized in**
**that** a cup-shaped, preferably dished dividing floor (10) having an opening (7) is disposed between the first and second volume region (1, 2).

7. The sorption device according to claim 6,
**characterized in**
**that** a guide (11) for the cover element (8) is disposed on the dividing floor (10).

8. The sorption device according to claim 7,
**characterized in**
**that** the guide (11) consists of a dividing-floor-side and a cover-side part (12, 13) wherein the two parts (12, 13) are preferably configured to be movable with respect to one another delimited by a stop.

9. The sorption device according to claim 8,
**characterized in**
**that** the cover-side part (13) of the guide (11) is configured to be rod-shaped.

10. The sorption device according to claim 8 or 9, **characterized in**
**that** the spring element (9) is disposed between an underside (14) of the cover element (8) and the dividing-floor side part (12) of the guide (11).

11. The sorption device according to any one of claims 8 to 10,
**characterized in**
**that** the dividing-floor side part (12) of the guide (11) has a through opening (15) for the cover-side part (13) of the guide (11).

12. The sorption device according to claim 11,
**characterized in**
**that** the cover element (8) is disposed on one side of the through opening (15) and a stop element (16) is disposed on the other side of the through opening (15) on the cover-side part (13) of the guide (11).

## Revendications

1. Dispositif de sorption, comprenant une première zone de volume (1), dans laquelle périodiquement un agent sorbant (3) sorbant ou désorbant un fluide de refroidissement et un condensateur (4) sont disposés, et une deuxième zone de volume (2) disposée au-dessous de la première, dans laquelle un évaporateur (5) est disposé, dans lequel un emplacement le plus profond (6) de la première zone de volume (1) présente une ouverture (7) menant à la deuxième zone de volume (2), qui est conçue de manière obturable avec un élément de couvercle (8) disposé dans la première zone de volume (1), s'ouvrant vers le haut par mouvement guidé, dans lequel l'élément de couvercle (8) présente latéralement à la première zone de volume (1) une surface avec une forme déviant le fluide de refroidissement vers le bord de l'élément de couvercle (8), dans lequel sur l'élément de couvercle (8) un élément de ressort (9) est disposé,
**caractérisé en ce que**
l'élément de ressort présente une force de ressort, qui est orientée en sens inverse à une force de pesanteur de l'élément de couvercle (8) dirigée vers le bas et est constamment plus petite que celle-ci.

2. Dispositif de sorption selon la revendication 1,
**caractérisé en ce que**
l'élément de couvercle (8) présente une surface en forme de calotte bombée vers le bas dans la direction du bord.

3. Dispositif de sorption selon la revendication 1 ou 2,
**caractérisé en ce que**
l'élément de couvercle (8) présente une surface en forme de calotte bombée vers le bas dans la direction du bord..

4. Dispositif de sorption selon la revendication 1,
**caractérisé en ce que**
l'élément de ressort (9) est conçu comme un ressort hélicoïdal, notamment comme un ressort de pression hélicoïdal.

5. Dispositif de sorption selon une des revendications 1 à 4,
**caractérisé en ce que**
entre l'ouverture (7) et l'élément de couvercle (8) un élément d'étanchéité est disposé.

6. Dispositif de sorption selon une des revendications 1 à 5,
**caractérisé en ce que**
entre la première et la deuxième zone de volume (1,2) un fond de séparation (10) en forme de coupelle, de préférence du type à fond bombé, présentant l'ouverture (7) est disposé.

7. Dispositif de sorption selon la revendication 6,
**caractérisé en ce que**
sur le fond de séparation (10) une glissière (11) pour l'élément de couvercle (8) est disposée.

8. Dispositif de sorption selon la revendication 7,
**caractérisé en ce que**
la glissière (11) est constituée d'une partie du côté du fond de séparation et une partie du côté du couvercle (12,13), dans lequel les deux parties (12,13) sont conçues de préférence de manière mobile l'une par rapport à l'autre délimitée par une butée.

9. Dispositif de sorption selon la revendication 8,
**caractérisé en ce que**
la partie du côté du couvercle (13) de la glissière (11) est conçue en forme de barre.

10. Dispositif de sorption selon la revendication 8 ou 9,
**caractérisé en ce que**
entre un côté inférieur (14) de l'élément de couvercle (8) et le partie du côté du fond de séparation (12) de la glissière (11) l'élément de ressort (9) est disposé.

11. Dispositif de sorption selon une des revendications 8 à 10,
**caractérisé en ce que**
la partie du côté du fond de séparation (12) de la glissière (11) présente une ouverture traversante (15) pour la partie du côté du couvercle (13) de la glissière (11).

12. Dispositif de sorption selon la revendication 11,
**caractérisé en ce que**
sur un côté de l'ouverture traversante (15) l'élément de couvercle (8) et sur l'autre côté de l'ouverture traversante (15) sur la partie du côté du couvercle (13) de la glissière (11), un élément de butée (16) est disposé.
